Europäisches Patentamt

European Patent Office

Office européen des brevets

(19)

(11) EP 0 797 345 B1

(12) EUROPEAN PATENT SPECIFICATION

(45) Date of publication and mention
of the grant of the patent:
06.06.2001 Bulletin 2001/23

(51) Int Cl.⁷: H04N 1/32, G06F 12/02

(21) Application number: 97200624.1

(22) Date of filing: 04.03.1997

(54) **A method of printing image information by means of a printer**

Druckverfahren für Bilddaten mittels Drucker

Procédé d'impression de données d'image par moyen d'un imprimeur

(84) Designated Contracting States:
DE FR GB NL

(30) Priority: 21.03.1996 NL 1002675

(43) Date of publication of application:
24.09.1997 Bulletin 1997/39

(73) Proprietor: Océ-Technologies B.V.
5914 CC Venlo (NL)

(72) Inventors:
• Bergmans, Jacques Johan Hubert
5971 DH Grubbenvorst (NL)
• Kessels, Gerardus Gertruda Johannes
Catharina
5914 AN Venlo (NL)
• van Gasteren, Theodrikus Henricus Ignatius
Emanuel
5975 AZ Sevenum (NL)
• van Vliembergen, Eduardus Josephus
Willibrordus
5924 AX Venlo (NL)
• Lommen, Antonius Hubertus Johannes
Gerardus
5971 AM Grubbenvorst (NL)

(74) Representative: Hanneman, Henri W., Dr. et al
Océ-Technologies B.V.
Patents & Information
St. Urbanusweg 43
P.O. Box 101
5900 MA Venlo (NL)

(56) References cited:
EP-A- 0 628 922          US-A- 4 763 167
US-A- 5 151 976          US-A- 5 481 354

**Description**

The invention relates to apparatus and a method of printing image information in a required orientation on sheets of receiving material by means of a printer.

A method of this kind is known from US Patent 4 763 167, which describes a copying method by means of which the image information of two different original sheets is read successively and after storage and processing is so printed on one copy sheet that the image orientation of the two images is identical and is perpendicular to the long side of the copy sheet. In this way it is possible to obtain copy sheets which are folded in the middle between the images in order thus to form a folded sheet, which, together with copy sheets obtained in a corresponding manner, is suitable for use as a manual. Alternatively, instead of a booklet with a fold line, i.e. a spine, or some other collecting means at the centre, it is possible to adopt collection at the left-hand or right-hand short side of the copy sheets, in which case the two images will be read out of the image or page memory with a 0° or 180° rotation.

According to one known method of reproduction, original sheets are printed twice on one copy sheet, whereupon the latter is cut through between the two (identical) images, thus giving one page for each of two booklets, e.g. manuals, to be produced.

When original sheets are printed, increasing use is made of copy sheets which may or may not be completely adapted to the method of subsequent collection. For this purpose, for example, use is made of copy sheets which may or may not be connected in continuous form, and the two short sides of which are provided with perforations suitable for storage in a ring binder. If the above method of reproduction is used, although identical pages would be obtained after cutting through the sheet, the perforation edges would be at opposite sides, something which is quite unacceptable. If two different pages, e.g. two consecutive pages, are imaged on the copy sheets, it would be a complex matter to compile the booklets, because when the copy sheet is cut through the centre the pages would have to be arranged alternately.

A main object of the invention, which in its broadest aspects is defined in claims 1 and 6, is to provide improvements in this respect, to which end, two images situated next to one another are printed with reading orientations rotated through 180° relatively to one another and forming a right angle with the sides provided with the collecting means. In this way, the image orientation with respect to the associated short side of the copy sheet will be the same for both images. If two different originals are copied on one copy sheet, two identically oriented consecutive pages will be obtained, intended for a single booklet. For considerations of efficiency, however, it is sometimes preferable to image a single original sheet twice on the copy sheet, and according to the invention this will give two identically oriented pages intended for two booklets made consecutively.

The method and apparatus according to the invention can be applied to any printing method, irrespective of the formats of the original sheet, on the one hand, and the copy sheet, on the other hand. Thus it is possible to use one A4 original sheet read into the copying machine in the portrait position, and an A4 copy sheet which is delivered by the printer in the portrait position, in which case rotation should take place through +90° and -90° respectively, with a reduction of 71%. A landscape sheet can also be used, the image of which is to be reproduced twice on a copy sheet delivered by the machine in the portrait position, in which case rotation will be through 180° for one of the images.

For the method and apparatus there is no need to start with original sheets scanned by a scanner and with the resulting data then processed. It is possible to generate the image data page-wise by means of a computer using a suitable program and print the image data thus generated as described. In this application, the term "original sheet" also refers to an image generated in the above-described manner.

Rotation can be effected by writing the data of an image line-by-line into a bit map memory and then reading out the data column-by-column (from bottom to top) from the memory. After the read-out the memory is empty and the data of the next image for rotation can be written in. Before the data of each subsequent image can be written in it is therefore necessary to wait until the read-out of the preceding image is completed. Time can be saved by using two memories which are used alternately: while one memory is being read out the next image is being written into the other memory. However, this approach increases costs.

According to another aspect of the present invention, an attractive manner of rotating the image data is applied, using just one memory with a capacity very little greater than that required to contain the image data of an image. According to this aspect the invention offers a rotation procedure for blocks of image information each corresponding to an original image from a series of at least two original images, using a buffer memory with locations corresponding to a matrix of image elements, or blocks of image elements, of an original image, hereinafter referred to as "image data", comprising: writing into the buffer memory image data of an image in a first sequence of memory locations and reading out of the buffer memory the written-in image data in a second sequence of memory locations, wherein the writing into the buffer memory of image data of a certain image from the series is effected in substantially the same sequence as that in which image data of an image directly preceding the said certain image in the said series were read out, wherein at the start of a series of images the image data are written into consecutive memory locations, which method is particularly characterised in that for a change of orientation in the form of a rotation through an angle of {0, +90, +180, -90} degrees, image data are read out of memory locations of the buffer memory in a sequence given by an address sequence series built up from series elements each relating to a memory location of the buffer memory in which an element or a block of elements of the said first matrix is stored, which series elements have a value given by:

$$\text{series element } (i_j) = (i^* \prod_{k=1}^{j} x_k) \text{ modulo } (d_1{}^*d_2+1)-1 \qquad (1)$$

where

i =     position within the address sequence series, where $1 \le i \le d_1{}^*d_2$
j =     serial number of the relevant image in the series
$d_1$ =     number of columns of the matrix
$d_2$ =     number of rows of the matrix
$x_k$ =     parameter related to the required angle of rotation for the $k^{th}$ image in the series,

where

$x_k$ =     1 for a rotation through 0°
              $-d_1$ for a rotation through +90°
              -1 for a rotation through +180° and
              $d_1$ for a rotation through -90°.

The image data of an image from the series are thus already written into the buffer memory while the image data of the preceding image of the series are being read out, either by writing new data directly on to a location that has become free or by using a possibly varying arrears of a number of memory locations, but always in the same sequence. It will be apparent that in this way it is no longer possible to obtain any fixed relationship between the positions of the image data in the image matrix and the positions of the memory locations in the memory. This problem can be solved with good management, but management in the form of a table with addresses again takes up memory space so that some of the gain is lost. Instead of such management, the above formula (1) is used according to the invention. This requires only minimal memory space and processor capacity. Formula (1) is not only suitable for use for rotating individual pixels but also blocks of pixels. The literature in fact discloses very fast hardware circuits which can rotate square blocks (e.g. 8*8) pixels through angles of 90° and multiples thereof. When these are used the image matrix is divided into such blocks and the blocks are written in and read out as a whole, formula (1) indicating the positions of the blocks in the memory.

With the formula according to the invention it is possible always to find the correct address sequence series after the next image has been written in following a read-out in the case of a preceding image rotation. By simple adjustment of the value of x, the correct addresses are always found with rotation through different angles. In these conditions it is possible to effect rotation consecutively through different angles within a series of images.

It should be noted that a similar method of writing image data from an image of a series into a memory at the locations freed by reading out the preceding image is described in US Patent 5 151 976. In this a file is converted line-by-line to a read-out column-by-column, from top to bottom, this being equivalent to a rotation through 90° plus a reflection. The addressing formula described in the said patent is therefore not suitable for a rotation as intended by the present invention, nor is it suitable for changing the angle of rotation for each image optionally in a series of images.

The rotation method according to the invention can also be applied in making duplex copies. For duplex printing, the image of the first original is first printed on one side of the copy sheet and then the copy sheet is turned 180° about the short axis and then the image of the second information sheet is printed on the second side. In this case action must be taken to keep the image orientation the same on both sides. An example of this action is described in European Patent Application 0 628 922 in Applicants' name. According to the method known therefrom, optimal use is made of the memory space by storing the image data of the first original image, as is conventional, in ascending address sequence in the memory starting from the first free memory address, but storing the image data of the second original image in reverse address sequence in the memory starting from the last free memory address. On read-out, the image data are always read out of the memory in ascending address sequence, so that the image data of the second original image are fed to the printer with an automatic 180° rotation.

A further development of the method according to the invention provides an alternative for this, whereby the original images are read consecutively into the memory and the read-out of the memory takes place consecutively after each write-in in accordance with an address sequence given by the address sequence series whose elements are defined by formula (1), wherein the selected angles of rotation differ by 180° relatively to one another and wherein the data of the two read-out operations are fed successively to the printer for consecutive imaging on one and the other side of a copy sheet respectively, the copy sheet being rotated through 180° between the two printing operations.

The invention also relates to apparatus suitable for performing the methods according to the invention.

The invention will be explained below with reference to an a number of examples and the accompanying drawings wherein:

Fig. 1 is a diagram showing a copying device applying the method according to the invention.

Fig. 2 shows the rotation of images in making copy sheets for booklets, according to the invention.

Fig. 3 diagrammatically illustrates part of a copying device for performing a method according to the invention.

Fig. 4 illustrates a matrix for writing-in and reading-out image data according to the invention in the case of +90° rotation.

Fig. 5 illustrates a matrix for writing-in and reading-out image data according to the invention in the case of -90° rotation.

Fig. 6 illustrates a matrix for writing-in and reading-out image data according to the invention in the case of +180° rotation.

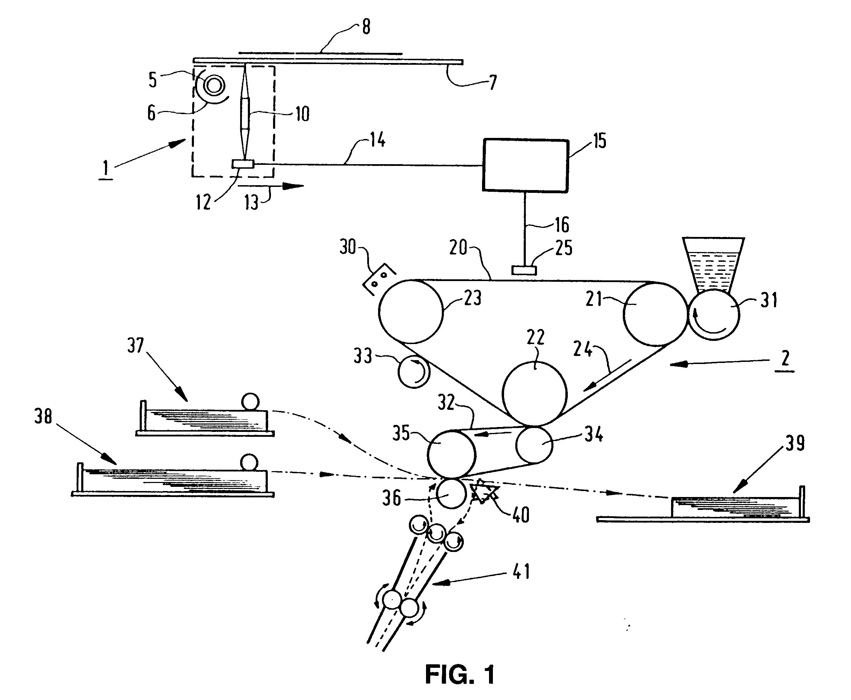

The copying apparatus shown in Fig. 1 comprises a scanner 1 and a printer 2. The scanner 1 is provided with a tubular lamp 5, a reflector co-operating therewith for illuminating a narrow strip of an information sheet or document 8 placed on a glass 7, and an array of imaging glass fibres (a "Selfoc lens array") by means of which the light reflected image-wise by the document is projected on a sensor array, e.g. in the form of a CCD array 12.

Since the scanner 1 is advanced at uniform speed in the direction of arrow 13 by known drive means (not shown), the document 8 is scanned line-wise by the CCD array 12. Thus each image dot on the document is converted to an analogue signal corresponding to the grey value of said image dot. The analogue signal is then converted to an 8-bit digital signal for each image dot by an A/D converter, whereafter the digital signals (image data) are fed via a number of parallel lines of a data bus 14 to an image processing device 15 in which the image data are subjected to one or more known image processing operations (thresholding, dithering, enlarging, reduction, rotation etc) and are stored, usually in compressed form, in a memory. The stored image data are then fed, after decompression if required, to the printer 2 via a data bus 16.

The printer is provided with an endless photoconductive belt 20 advanced in the direction of arrow 24 at a uniform speed by means of drive and guide rollers 21, 22 and 23 respectively. An LED array 25 is so actuated by means of the processed image data fed via the data bus 16 that the photoconductive belt 20, after being electrostatically charged by a corona device 30, is exposed line-by-line image-wise.

The latent charge image forming on the belt 20 as a result of the exposure is developed with toner powder by means of a magnetic brush device 31 to form the toner image which is then brought into contact under pressure with an endless intermediate medium belt 32 in a first transfer zone, said belt being made of or covered with an elastic and heat-resistant material, e.g. silicone rubber.

In these conditions, the toner image is transferred by adhesion from the belt 20 to the belt 32. After this image transfer, any remaining toner powder residues are removed from the photoconductive belt 20 by means of a cleaning device 33, whereupon the belt is ready for re-use. The intermediate medium belt 32 is trained over drive and guide rollers 34, 35, the intermediate medium belt 32 being heated to a temperature above the softening temperature of the toner powder, e.g. by means of an infrared radiator disposed inside roller 35. While belt 32 with the toner image thereon is advanced, the toner image becomes tacky as a result of the heating. In a second transfer zone between the belt 32 and a pressure roller 36 the tacky toner image is transferred by pressure and simultaneously fixed on a copy sheet fed from one of the reservoirs or feed trays 37 or 38. The resulting copy can then be deposited in a collecting tray 39. In the case of duplex copies, i.e. copies with an image on both sides, the copy sheets are fed to a turn-over device 41 by means of a deflecting element 40 (placed in the position shown in broken lines), after one side of the sheet has been printed. Each copy sheet is turned over in the turn-over device 41, whereupon it is then fed back to the second transfer zone between the belt 32 and the pressure roller 36, where it is printed on the other side with a powder image and then deposited in the collecting tray 39.

Fig. 1 shows only two copy sheet reservoirs 37 and 38, but the number of reservoirs can be increased to enable all conventional formats of copy sheets (A5, A4, A3 or American formats) to be fed to the printer 2. The said reservoirs can also be disposed to enable the various copy sheet formats to be fed in different orientations - i.e. landscape - with the longer side in the direction of transit, or portrait - with the shorter side in the direction of transit, depending on the arrangement of the original on the glass 7.

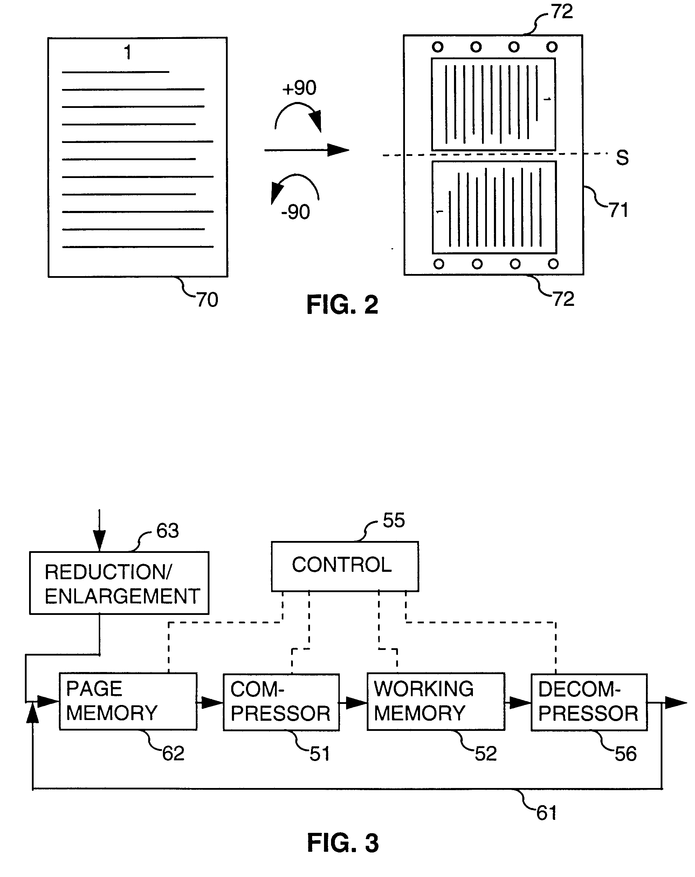

Fig. 3 diagrammatically illustrates an example of a relevant part of the image processing device 15. The digital signals for each image dot are fed successively via a data bus 50 to an enlargement/reduction module 63, a page memory 62 for rotation, and a compression device 51, in which latter the image data are compressed for each line of the image in a manner known in the art. The compressed data are then stored in a working memory 52, in which the image data of all the documents required for a specific copy job are stored line-by-line. The image data are then read out of the working memory 52, the image data being fed line-by-line to a decompression device 56 for decompression therein in known manner. The image data are then fed line-by-line via a data bus 60 to other known image processing operations and finally sent to the LED array 25 of the printer 2.

The central control device 55 actuates the various above-mentioned process functions of the printer. In the part of the image processing device shown in Fig. 3, the page memory 62 is provided with a control in accordance with the invention. The page memory 62 could also be accommodated after the decompression device 56 in the direction of the process.

When the method according to the invention is applied, original images, possibly after reduction in module 63 (depending on the formats selected for the original and print), are printed next to one another on a copy sheet having perforations or other collection means on two sides, the orientations of the two images being rotated through 180° relatively to one another and forming a right angle with the sides provided with the perforations. This is shown in Fig. 2 for the case in which an original sheet 70 is imaged twice on a copy sheet 71, both short sides of which are provided with rows of ring binder holes 72 for making up two identical booklets. If two different images are printed on a receiving sheet and are accommodated in a booklet in the form of two, e.g. successive, pages, the images in the right-hand part of Fig. 2 differ but their relative orientation is the same as in the case referred to previously. It will be apparent from Fig. 2 that of the two images for printing on a receiving sheet the first is rotated through -90° and the second through +90°. When the printing is completed, the copy sheets can be cut through between the two images, whereafter the resulting part-sheets can be collected at the perforations. All the images are then in the correct orientation.

It is possible that it is only after a number of documents have been scanned by the scanner 1 and the image data have been stored in the memory 52 that the image data for one or more documents are found to require rotation. In that case the relevant image data are called up from the memory 52 and re-fed to the page memory 62 via the data bus 61 in order to be stored and read-out with the correct rotation.

If the original images are to be printed on a copy sheet of equal size, these original images must first be reduced. For example, to print an A3 original on an A4 receiving sheet, it is reduced 71% electronically in module 63. This percentage is obtained by dividing the physical dimensions of an A4 sheet and an A3 sheet (201/297). With such reduction, the white margin along the text on the original is also reduced. A white margin of 10 mm then becomes 7.1 mm.

In a number of cases it is desirable to keep this margin constant since otherwise the text would be imaged too densely at the collecting means. In that case, it is not the physical dimensions of the paper formats that are divided into one another, and instead these formats are reduced with the required margin. On the basis of an A3 sheet having a 20 mm margin on both sides, if it is required to obtain a print also having a margin of 20 mm, a 66% reduction is applied ((210-40)/(297-40)). The printer is provided with selection means to enable a choice to be made between the two options in the case of automatic enlargement and/or reduction.

The literature describes numerous methods of rotating image data through 90° or multiples thereof in a memory. In principle these can all be applied to the apparatus according to the invention. However, the invention provides a better method which combines minimum memory occupation with high processing speed.

According to this method, the image data of an image from a series of images for consecutive rotation are already written into the page memory 62 while the image data of the preceding image from the series are read out, either by writing new data directly on a location that has become free or with arrears in a number of memory locations, but always in the same sequence.

The image data of the first image of a series of images for rotation is written line-by-line according to the lines of the matrix from the top left to the bottom right into successive addresses of the page memory 62.

It will be apparent that by writing new image data in the sequence of the preceding read-out there is no fixed relationship between the positions of the image data in the image matrix and the positions of the memory locations in the memory. Consequently, the control device 55 always calculates an address sequence series which always indicates the memory locations at which the required image data can be found.

The said address sequence series is given by the following formula:

$$\text{series element } (i_j) = \left(i^* \prod_{k=1}^{j} x_k\right) \text{ modulo } (d_1{}^*d_2+1)-1 \tag{1}$$

where

i = position within the address sequence series, where $1 \leq i \leq d_1 * d_2$

j = serial number of the relevant image in the series

$d_1$ = number of columns of the image matrix

$d_2$ = number of rows of the image matrix

$x_k$ = parameter related to the required angle of rotation for the $k^{th}$ image in the series,

where

$x_k$ = 1 for a rotation through 0°

$-d_1$ for a rotation through +90°

-1 for a rotation through +180° and

$d_1$ for a rotation through -90°.

As described, this formula always gives the correct location sequence for a series of consecutive rotation operations. The product series π does not always have to be developed in this connection. Formula (1) can in fact also be written in iterative form as follows:

$$\text{series element } (i_j) = (i* M_j) \text{ modulo } (d_1*d_2+1)-1$$

$$\text{where } M_j = (M_{j-1} * x_j) \text{ modulo } (d_1*d_2+1) \text{ and } M_o = 1$$

If the factor M is always stored in the memory, it can be used in the next operation by multiplying it by the factor x for the next operation.

This formula is not only suitable for use for rotation of single pixels but also for blocks of pixels. Very fast hardware circuits are in fact known from the literature which can rotate square blocks (e.g. 8*8) pixels through angles of 90° and multiples thereof. When used, the image matrix is divided into such blocks and the blocks are moved as a whole, formula (1) indicating the positions of the blocks in the memory.

Finally it should be noted that filling in $x_k$ = 1 (rotation through 0°), the page memory acts as an ordinary buffer.

The practical procedure will now be explained by reference to one example.

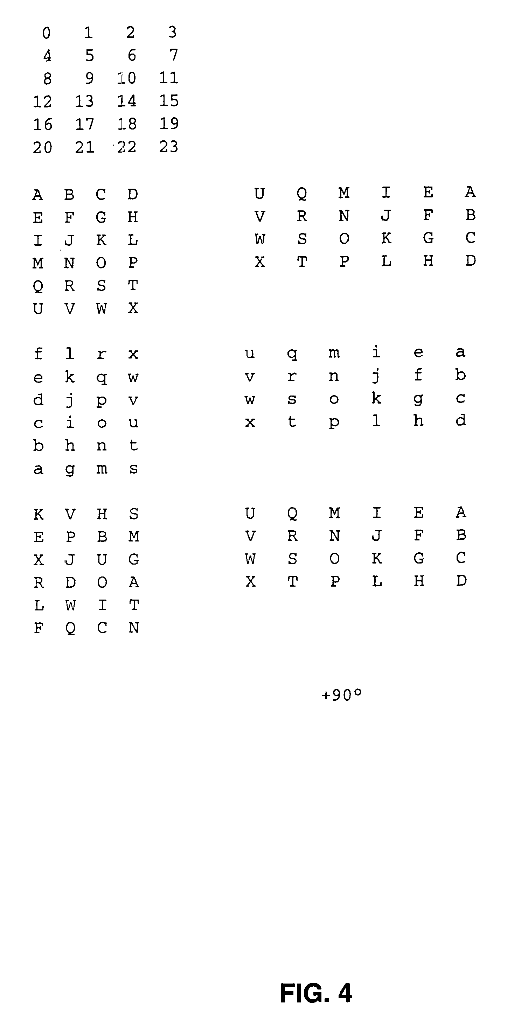

Figs. 4, 5 and 6 give a number of sequences in a matrix arrangement, according to which rotation is respectively through +90, -90 and +180°. For this example $d_1$ = 4 and $d_2$ = 6.

At the top of Figs. 4, 5 and 6 there is a matrix indicating how the image elements of the first image are written into the page memory 62. The figures for memory locations are given in this matrix. Beneath this first matrix there is given on the left in each case a matrix for three consecutive images in a series, the matrix indicating the sequence of writing the image data into the page memory 62 while on the right the matrix shows the read-out result. For distinguishing purposes use is made alternately of capital letters and lower case to indicate that the image data relate to consecutive original images. The read-out sequence for each image is always given by formula (1). In the case of rotation through +90°, $x_k$ = $-d_1$ is filled in in formula (1). In the case of rotation through -90°, the formula applies with $x_k$ = $d_1$. In the case of rotation through 180°, the same formula applies with $x_k$ = -1. The central control device 55 can determine the address sequence for the read-out in this way.

Fig. 4 gives an example of a rotation through +90°. The top line on the left gives the original first image matrix. This is written into the page memory 62 at locations in accordance with the matrix left at the top of Fig. 4. The image data are then read out from this first image in accordance with the addressed sequence 20, 16, 12, 8, 4, 0, 21, 17, 13, 9, 5, 1, 22, 18, 14, 10, 6, 2, 23, 19, 15, 11, 7, 3 generated by formula (1).

The result of this read-out is shown in the top line on the right in Fig. 4, i.e., U, Q, M, I, E, A, etc., and it will be seen that the image of the original matrix is turned through 90°.

The first image data a of the next image for rotation are then written in at the first free location 20, followed by b, c, d, e, f, etc. For read-out, however, the address sequence used is 15, 6, 22, 13, 4, 20, 11, 2, 18, 9, 0, 16, 7, 23, 14, 5, 21, 12, 3, 19, 10, 1, 17, 8, so that the image matrix obtained is shown at the middle on the right in Fig. 4, this matrix corresponding to the original image rotated through 90°. On the next write-in, the first image data A of the third image are written in at the first free location u. This gives the write-in matrix shown at the bottom left in Fig. 4. This matrix is then read out in the address sequence 10, 21, 7, 18, 4, 15, 1, 12, 23, 9, 20, 6, 17, 3, 14, 0, 11, 22, 8, 19, 5, 16, 2, 13, so that again the rotated image matrix shown at the bottom right in Fig. 4 is obtained.

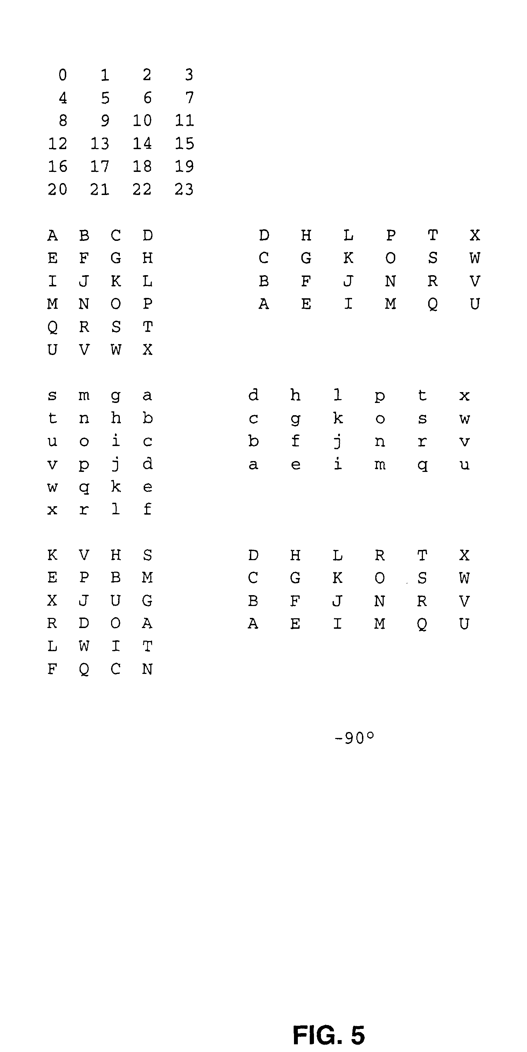

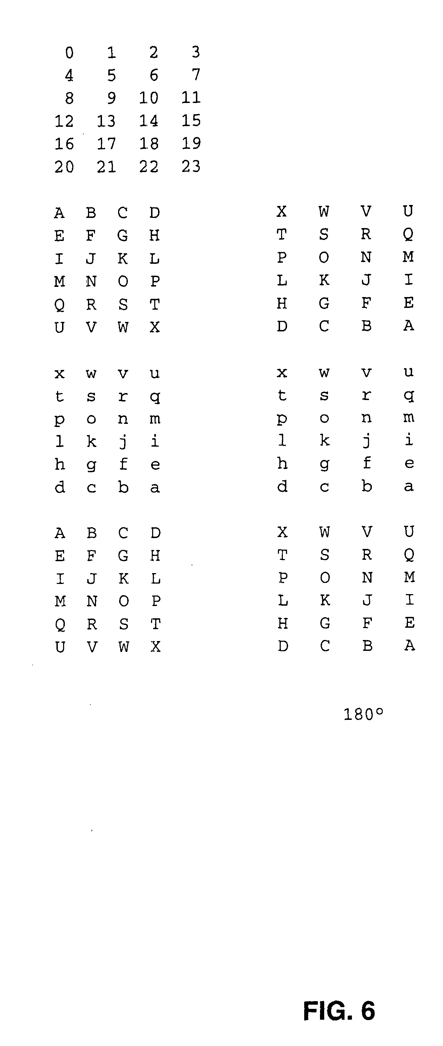

The procedure is carried out correspondingly for rotation through -90° and through 180°. The first read-out sequence series in the case of -90° is as follows for example: 3, 7, 11, 15, 19, 23, 2, 6, 10, 14, 18, 22, 1, 5, 9, 13, 17, 21, 0, 4, 8, 12, 16, 20, and for 180°: 23, 22, 21, 20, 19, 18, 17, 16, 15, 14, 13, 12, 11, 10, 9, 8, 7, 6, 5, 4, 3, 2, 1. We would also refer briefly to Figs. 5 and 6.

The above-described method of rotating images can be used without being restricted if the images to be printed next to one another on a receiving sheet differ from one another. Each image of the series of originals to be printed must then be rotated through 90°, alternately in the counterclockwise direction (-90°) and in the clockwise direction (+90°). Formula (1) then always gives the correct read-out/write-in sequence.

If the images for printing on a receiving sheet are identical (i.e. for making two identical booklets) an image written once into memory 62 is read out twice, in accordance with patterns in which the same address sequence series is followed in two ways, corresponding to +90° and -90°. On the second read-out the image data of the next image is written into the read-out memory locations, whereafter the address sequence series is adjusted to this second read-out.

It will be clear that the system shown in Fig. 3 can also be used for duplex printing. In that case, the page memory 62 will be actuated for each second image in order to rotate it through 180°, in accordance with the sequence shown in Fig. 6. The writing into the working memory 52 thereof then takes place after writing into the working memory 52 of the first image for printing.

Although the invention has been explained with reference to the above-described examples it is not restricted thereto. It will be clear to the skilled man that other embodiments are possible within the scope of the following claims.

**Claims**

1.  A method of printing image information on receiving material, two sides of which are provided with means for collecting such material, the image information of two images being printed next to one another on the receiving material, characterised in that the images situated next to one another are printed with reading orientations rotated through 180° relatively to one another and forming a right angle with the sides provided with the collecting means.

2.  A method according to claim 1, characterised in that two identical images are printed next to one another on the receiving material.

3.  A method according to claim 1 or 2, characterised in that the collecting means are holes.

4.  A method according to claim 1, wherein the image information for printing comprises a series of at least two original images, said method comprising a procedure for rotating an original image using a buffer memory with locations corresponding to a matrix of image elements, or blocks of image elements, of an original image, hereinafter referred to as "image data",

    which rotation procedure comprises:

    writing into the buffer memory image data of an image in a first sequence of memory locations and reading out of the buffer memory the written-in image data in a second sequence of memory locations,
    wherein the writing into the buffer memory of image data of a certain image from the series is effected in substantially the same sequence as that in which image data of an image directly preceding the said certain image in the said series were read out,
    wherein at the start of a series of images the image data are written into consecutive memory locations,
    and wherein for rotation through an angle of {0, +90, +180, -90} degrees, image data are read out of memory locations of the buffer memory in a sequence given by an address sequence series built up from series elements each relating to a memory location of the buffer memory in which an element or a block of elements of the said matrix is stored, which series elements have a value given by:

$$\text{series element } (i_j) = (i* \prod_{k=1}^{j} x_k) \text{ modulo } (d_1 {*} d_2 {+} 1) {-} 1 \qquad (1)$$

    where

    $i =$     position within the address sequence series, where $1 \le i \le d_1 {*} d_2$

j = serial number of the relevant image in the series
$d_1$ = number of columns of the matrix
$d_2$ = number of rows of the matrix
$x_k$ = parameter related to the required angle of rotation for the $k^{th}$ image in the series,

where

$x_k$ = 1 for a rotation through 0°
   $-d_1$ for a rotation through +90°
   -1 for a rotation through +180° and
   $d_1$ for a rotation through -90°.

**5.** A method according to claim 4, wherein two original images are written consecutively into the memory and the read-out of the memory after each write-in takes place successively in accordance with an address sequence given by the address sequence series whose elements are given by formula (1), the selected angles of rotation differing from one another by 180°, and wherein the data of the two read-outs are fed successively to the printer for imaging on the same copy sheet.

**6.** Apparatus for printing image information on receiving material provided with collecting means on two sides, comprising a memory in which the image information of one or more images is stored and a printer adapted to print two images next to one another, characterised in that the image information of images for printing next to one another is fed to the printer with reading orientations rotated through 180° relative to one another and forming a right angle with the sides provided with the collecting means.

**7.** Apparatus according to claim 6, characterised in that the image information of a first image is rotated through an angle of -90° and the image information of the image next to the same is rotated through an angle of +90°.

**8.** Apparatus according to claim 6, characterised in that the image information of a first image is not rotated and the image information of the image situated next to the same is rotated through an angle of 180°.

**9.** Apparatus according to claim 6 further comprising a buffer memory with locations corresponding to a matrix of image elements, or blocks of image elements, hereinafter referred to as "image data",

and a control unit for controlling the write-in and read-out of image data in the buffer memory in such manner that image data of a certain image from the series are written into the buffer memory in substantially the same sequence as that in which image data of an image directly preceding the said certain image in the said series were read out,
wherein at the start of a series of images the image data are written into consecutive memory locations, and wherein for rotation through an angle of {0, +90, +180, -90} degrees, image data are read out from memory locations of the buffer memory in a sequence given by an address sequence series built up of series elements each relating to a memory location of the buffer memory in which an element or a block of elements of the said matrix is stored, which series elements have a value given by

$$\text{series element }(i_j) = \left(i^* \prod_{k=1}^{j} x_k\right) \text{ modulo } (d_1{}^*d_2+1)-1 \tag{1}$$

where

i = position within the address sequence series, where $1 \leq i \leq d_1{}^*d_2$
j = serial number of the relevant image in the series
$d_1$ = number of columns of the matrix
$d_2$ = number of rows of the matrix
$x_k$ = parameter related to the required angle of rotation for the $k^{th}$ image in the series,

where

$x_k =$ 1 for a rotation through 0° $-d_1$ for a rotation through +90°
-1 for a rotation through +180° and
$d_1$ for a rotation through -90°.

**Patentansprüche**

1. Verfahren zum Drucken von Bildinformation auf Empfangsmaterial, das an zwei Kanten mit Einrichtungen zum Binden dieses Materials versehen ist, wobei die Bildinformation von zwei Bildern nacheinander auf das Empfangsmaterial gedruckt wird, dadurch gekennzeichnet, daß die nebeneinander stehenden Bilder mit Leseorientierungen gedruckt werden, die relativ zueinander um 180° gedreht sind und mit den Kanten, die mit den Bindeeinrichtungen versehen sind, einen rechten Winkel bilden.

2. Verfahren nach Anspruch 1, dadurch gekennzeichnet, daß zwei identische Bilder nebeneinander auf das Empfangsmaterial gedruckt werden.

3. Verfahren nach Anspruch 1 oder 2, dadurch gekennzeichnet, daß die Bindeeinrichtungen Löcher sind.

4. Verfahren nach Anspruch 1, bei dem die zu druckende Bildinformation eine Folge aus wenigstens zwei Vorlagenbildern umfaßt, welches Verfahren eine Prozedur aufweist zum Drehen eines Vorlagenbildes unter Verwendung eines Pufferspeichers mit Speicherplätzen entsprechend einer Matrix von Bildelementen oder Blöcken von Bildelementen eines Vorlagenbildes, die im folgenden als "Bilddaten" bezeichnet werden,
wobei die Drehprozedur die folgenden Schritte aufweist:

Schreiben von Bilddaten eines Bildes in den Pufferspeicher in einer ersten Speicherplatz-Reihenfolge und Lesen der eingeschriebenen Bilddaten aus dem Pufferspeicher in einer zweiten Speicherplatz-Reihenfolge,

wobei das Schreiben von Bilddaten eines bestimmten Bildes aus der Folge in den Pufferspeicher im wesentlichen in derselben Reihenfolge erfolgt wie diejenige, mit der Bilddaten eines diesem bestimmten Bild in der Folge direkt vorangehenden Bildes gelesen wurden,

wobei am Beginn einer Folge von Bildern die Bilddaten in aufeinanderfolgende Speicherplätze geschrieben werden und

wobei zur Drehung um einen Winkel von {0, +90, +180, -90} Grad Bilddaten aus Speicherplätzen des Pufferspeichers in einer Reihenfolge gelesen werden, die gegeben ist aus durch eine Adressensequenzfolge, die aufgebaut ist aus Folgenelementen, die sich jeweils auf einen Speicherplatz im Pufferspeicher beziehen, in dem ein Element oder Block von Elementen der Matrix gespeichert ist, welche Folgenelemente einen Wert haben, der gegeben ist durch:

$$\text{Folgenelement} \quad (i_j) = \left( i * \prod_{k=1}^{j} x_k \right) \text{ modulo } (d_1 * d_2 + 1) - 1 \qquad (1)$$

wobei

$i =$ Position innerhalb der Adressensequenzfolge, mit $1 \le i \le d_1{}^* d_2$
$j =$ Ordnungsnummer des betreffenden Bildes in der Folge
$d_1 =$ Anzahl der Spalten der Matrix
$d_2 =$ Anzahl der Zeilen der Matrix
$x_k =$ Parameter, der sich auf den geforderten Drehwinkel für das k-te Bild in der Folge bezieht,

mit

$x_k =$ 1 für eine Drehung um 0°
$-d_1$ für eine Drehung um +90°
-1 für eine Drehung um +180° und
$d_1$ für eine Drehung um -90°.

**5.** Verfahren nach Anspruch 4, bei dem zwei Vorlagenbilder nacheinander in den Speicher geschrieben werden und das Lesen aus dem Speicher nach jedem Einschreibvorgang der Reihe nach erfolgt, in Übereinstimmung mit einer Adressensequenz, die durch die Adressensequenzfolge gegeben ist, deren Elemente durch die Formel (1) angegeben sind, wobei sich die ausgewählten Drehwinkel um 180° voneinander unterscheiden und wobei die Daten der beiden Leseergebnisse zur Bilderzeugung auf demselben Kopiebogen nacheinander an den Drucker ausgegeben werden.

**6.** Vorrichtung zum Drucken von Bildinformation auf Empfangsmaterial, das an beiden Kanten mit Bindeeinrichtungen versehen ist, mit einem Speicher, in dem Bildinformation eines oder mehrerer Bilder gespeichert wird, und einem Drucker, der dazu ausgebildet ist, zwei Bilder nebeneinander zu drucken, dadurch gekennzeichnet, daß die Bildinformation von nebeneinander zu drukkenden Bildern dem Drucker mit Leseorientierungen zugeführt werden, die um 180° relativ zueinander gedreht sind und mit den mit den Bindeeinrichtungen versehenen Kanten einen rechten Winkel bilden.

**7.** Vorrichtung nach Anspruch 6, dadurch gekennzeichnet, daß die Bildinformation eines ersten Bildes um einen Winkel von -90° und die Bildinformation des daneben stehenden Bildes um einen Winkel von +90° gedreht wird.

**8.** Vorrichtung nach Anspruch 6, dadurch gekennzeichnet, daß die Bildinformation eines ersten Bildes nicht gedreht wird und die Bildinformation eines daneben stehenden Bildes um 180° gedreht wird.

**9.** Vorrichtung nach Anspruch 6, mit einem Pufferspeicher mit Speicherplätzen entsprechend einer Matrix von Bildelementen oder von Blöcken von Bildelementen, die im folgenden als "Bilddaten" bezeichnet werden,

und einer Steuereinheit zur Steuerung des Schreibens und Lesens von Bilddaten in dem Pufferspeicher in der Weise, daß Bilddaten eines bestimmten Bildes aus der Folge im wesentlichen in derselben Reihenfolge in den Pufferspeicher geschrieben werden wie diejenige, mit der Bilddaten eines diesem bestimmten Bild in der Folge direkt vorangehenden Bildes gelesen wurden,

wobei am Beginn einer Folge von Bildern die Bilddaten in aufeinanderfolgende Speicherplätze geschrieben werden und

wobei zur Drehung um einen Winkel von {0, +90, +180, -90} Grad Bilddaten aus Speicherplätzen des Pufferspeichers in einer Reihenfolge gelesen werden, die gegeben ist aus durch eine Adressensequenzfolge, die aufgebaut ist aus Folgenelementen, die sich jeweils auf einen Speicherplatz im Pufferspeicher beziehen, in dem ein Element oder Block von Elementen der Matrix gespeichert ist, welche Folgenelemente einen Wert haben, der gegeben ist durch:

wobei zur Drehung um einen Winkel von {0, +90, +180, -90} Grad Bilddaten aus Speicherplätzen des Pufferspeichers in einer Reihenfolge gelesen werden, die gegeben ist aus durch eine Adressensequenzfolge, die aufgebaut ist aus Folgenelementen, die sich jeweils auf einen Speicherplatz im Pufferspeicher beziehen, in dem ein Element oder Block von Elementen der Matrix gespeichert ist, welche Folgenelemente einen Wert haben, der gegeben ist durch:

$$\text{Folgenelement} \quad (i_j) = \left(i * \prod_{k=1}^{j} x_k\right) \bmod (d_1 * d_2 + 1) - 1 \qquad (1)$$

wobei

$i =$ Position innerhalb der Adressensequenzfolge, mit $1 \leq i \leq d_1{}^* d_2$

j = Ordnungsnummer des betreffenden Bildes in der Folge

$d_1$ = Anzahl der Spalten der Matrix

$d_2$ = Anzahl der Zeilen der Matrix

$x_k$ = Parameter, der sich auf den geforderten Drehwinkel für das k-te Bild in der Folge bezieht,

mit

$x_k$ = 1 für eine Drehung um 0°

$-d_1$ für eine Drehung um +90°

-1 für eine Drehung um +180° und

$d_1$ für eine Drehung um -90°.

**Revendications**

1. Procédé d'impression d'informations d'image sur un matériau de réception dont deux côtés sont pourvus de moyens servant à l'assemblage d'un tel matériau, les informations d'image de deux images étant imprimées les unes à côté des autres sur le matériau de réception, caractérisé en ce que les images situées l'une à côté de l'autre sont imprimées avec des orientations de lecture présentant un décalage angulaire de 180° l'une vis-à-vis de l'autre et formant un angle droit avec les côtés pourvus des moyens d'assemblage.

2. Procédé suivant la revendication 1, caractérisé en ce que deux images identiques sont imprimées l'une à côté de l'autre sur le matériau de réception.

3. Procédé suivant la revendication 1 ou 2, caractérisé en ce que les moyens d'assemblage sont des trous.

4. Procédé suivant la revendication 1, selon lequel les informations d'image prévues pour une impression comprennent une série d'au moins deux images originales, ledit procédé comprenant une procédure servant à appliquer une rotation à une image originale en utilisant une mémoire tampon comportant des emplacements correspondant à une matrice d'éléments d'image, ou de blocs d'éléments d'image, d'une image originale, ci-après appelés "données d'image", laquelle procédure de rotation consiste à :

inscrire, dans la mémoire tampon, des données d'image d'une image suivant une première séquence d'emplacements de mémoire et à extraire par lecture, depuis la mémoire tampon, les données d'image inscrites, suivant une seconde séquence d'emplacements de mémoire,

l'inscription, dans la mémoire tampon, de données d'image d'une certaine image provenant de la série étant effectuée suivant sensiblement la même séquence que celle suivant laquelle des données d'images d'une image précédant directement ladite certaine image de ladite série ont été lues,

au début d'une série d'images, les données d'image étant inscrites dans des emplacements de mémoire successifs,

et, pour une rotation d'un angle de {0, + 90, + 180,-90} degrés, des données d'image étant lues dans des emplacements de mémoire de la mémoire tampon suivant une séquence fournie par une série de séquences d'adresses élaborée à partir d'éléments de série liés chacun à un emplacement de mémoire de la mémoire tampon dans lequel un élément ou bloc d'éléments de ladite matrice est rangé, lesquels éléments de série ont une valeur donnée par :

$$\text{élément de série } (i_j) = (i * \prod_{k=1}^{j} x_k) \, \text{modulo} (d1*d2+1) - 1 \quad (1)$$

dans laquelle

i = position dans la série de séquences d'adresses, avec $1 \le i \le d_1{}^* d_2$

j = numéro de série de l'image considérée dans la série

$d_1$ = nombre de colonnes de la matrice

$d_2$ = nombre de lignes de la matrice

$x_k$ = paramètre lié à l'angle de rotation requis pour la $k^{ième}$ image dans la série,

avec

$x_k$ = 1 pour une rotation de 0°
- $d_1$ pour une rotation de + 90°
- 1 pour une rotation de + 180° et
- $d_1$ pour une rotation de - 90°.

**5.** Procédé suivant la revendication 4, selon lequel deux images originales sont inscrites consécutivement dans la mémoire et la lecture de la mémoire après chaque inscription a lieu successivement conformément à une séquence d'adresses fournie par la série de séquences d'adresses dont les éléments sont fournis par la formule (1), les angles de rotation sélectionnés différant l'un de l'autre de 180°, et selon lequel les données des deux lectures sont envoyées successivement à l'imprimante en vue d'une formation d'image sur la même feuille de copie.

**6.** Dispositif d'impression d'informations d'image sur un matériau de réception pourvu de moyens d'assemblage sur deux côtés, comprenant une mémoire, dans laquelle les informations d'image d'une ou de plusieurs images sont rangées, et une imprimante apte à imprimer deux images l'une à côté de l'autre, caractérisé en ce que les informations d'image d'images prévues pour une impression l'une à côté de l'autre sont envoyées à l'imprimante avec des orientations de lecture décalées angulairement de 180° l'une vis-à-vis de l'autre et formant un angle droit avec les côtés pourvus des moyens d'assemblage.

**7.** Dispositif suivant la revendication 6, caractérisé en ce que les informations d'image d'une première image sont soumises à une rotation d'un angle de - 90° et les informations d'image de l'image qui suit sont soumises à une rotation d'un angle de + 90°.

**8.** Dispositif suivant la revendication 6, caractérisé en ce que les informations d'image d'une première image ne sont pas soumises à une rotation et les informations d'image de l'image qui suit celle-ci sont soumises à une rotation d'un angle de 180°.

**9.** Dispositif suivant la revendication 6, comprenant en outre une mémoire tampon, comportant des emplacements correspondant à une matrice d'éléments d'image, ou de blocs d'éléments d'images, ci-après appelés "données d'image",

et une unité de commande servant à commander l'inscription et la lecture de données d'image dans la mémoire tampon d'une manière telle que des données d'image d'une certaine image provenant de la série sont inscrites dans la mémoire tampon suivant sensiblement la même séquence que celle suivant laquelle des données d'images d'une image précédant directement ladite certaine image de ladite série ont été lues,
au début d'une série d'images, les données d'image étant inscrites dans des emplacements de mémoire successifs,
et, pour une rotation d'un angle de {0, + 90, + 180,-90} degrés, des données d'image étant lues dans des emplacements de mémoire de la mémoire tampon suivant une séquence fournie par une série de séquences d'adresses élaborée à partir d'éléments de série liés chacun à un emplacement de mémoire de la mémoire tampon dans lequel un élément ou bloc d'éléments de ladite matrice est rangé, lesquels éléments de série ont une valeur donnée par :

$$\text{élément de série } (i_j) = (i * \prod_{k=1}^{j} x_k) \, \text{modulo}(d1*d2+1) - 1 \quad (1)$$

dans laquelle

$i$ = position dans la série de séquences d'adresses, avec $1 \leq i \leq d_1 {}^* d_2$
$j$ = numéro de série de l'image considérée dans la série
$d_1$ = nombre de colonnes de la matrice
$d_2$ = nombre de lignes de la matrice

$x_k$ = paramètre lié à l'angle de rotation requis pour la k$^{ième}$ image dans la série,

avec

$x_k$ = 1 pour une rotation de 0°
- $d_1$ pour une rotation de + 90°
- 1 pour une rotation de + 180° et
$d_1$ pour une rotation de - 90°.

**FIG. 1**

EP 0 797 345 B1

**FIG. 2**

**FIG. 3**

```
 0    1    2    3
 4    5    6    7
 8    9   10   11
12   13   14   15
16   17   18   19
20   21   22   23
```

```
A   B   C   D                U   Q   M   I   E   A
E   F   G   H                V   R   N   J   F   B
I   J   K   L                W   S   O   K   G   C
M   N   O   P                X   T   P   L   H   D
Q   R   S   T
U   V   W   X
```

```
f   l   r   x                u   q   m   i   e   a
e   k   q   w                v   r   n   j   f   b
d   j   p   v                w   s   o   k   g   c
c   i   o   u                x   t   p   l   h   d
b   h   n   t
a   g   m   s
```

```
K   V   H   S                U   Q   M   I   E   A
E   P   B   M                V   R   N   J   F   B
X   J   U   G                W   S   O   K   G   C
R   D   O   A                X   T   P   L   H   D
L   W   I   T
F   Q   C   N
```

+90°

# FIG. 4

```
 0    1    2    3
 4    5    6    7
 8    9   10   11
12   13   14   15
16   17   18   19
20   21   22   23
```

```
A   B   C   D          D    H    L    P    T    X
E   F   G   H          C    G    K    O    S    W
I   J   K   L          B    F    J    N    R    V
M   N   O   P          A    E    I    M    Q    U
Q   R   S   T
U   V   W   X
```

```
s   m   g   a          d    h    l    p    t    x
t   n   h   b          c    g    k    o    s    w
u   o   i   c          b    f    j    n    r    v
v   p   j   d          a    e    i    m    q    u
w   q   k   e
x   r   l   f
```

```
K   V   H   S          D    H    L    R    T    X
E   P   B   M          C    G    K    O    S    W
X   J   U   G          B    F    J    N    R    V
R   D   O   A          A    E    I    M    Q    U
L   W   I   T
F   Q   C   N
```

-90°

# FIG. 5

```
 0    1    2    3
 4    5    6    7
 8    9   10   11
12   13   14   15
16   17   18   19
20   21   22   23


A    B    C    D          X    W    V    U
E    F    G    H          T    S    R    Q
I    J    K    L          P    O    N    M
M    N    O    P          L    K    J    I
Q    R    S    T          H    G    F    E
U    V    W    X          D    C    B    A


x    w    v    u          x    w    v    u
t    s    r    q          t    s    r    q
p    o    n    m          p    o    n    m
l    k    j    i          l    k    j    i
h    g    f    e          h    g    f    e
d    c    b    a          d    c    b    a


A    B    C    D          X    W    V    U
E    F    G    H          T    S    R    Q
I    J    K    L          P    O    N    M
M    N    O    P          L    K    J    I
Q    R    S    T          H    G    F    E
U    V    W    X          D    C    B    A
```

180°

# FIG. 6